# EUROPÄISCHE PATENTSCHRIFT

(11) **EP 3 254 138 B1**
(45) Veröffentlichungstag und Bekanntmachung des Hinweises auf die Patenterteilung: **13.03.2019**
(21) Anmeldenummer: 16702658.2
(22) Anmeldetag: 27.01.2016
(51) Int. Cl.: G01S 13/87, G01S 13/93, G01S 13/86, G01S 7/02

(54) **VERFAHREN ZUR ERMITTLUNG EINER QUERPOSITIONSINFORMATION EINES KRAFTFAHRZEUGS AUF EINER FAHRBAHN UND KRAFTFAHRZEUG**
METHOD FOR ACQUIRING TRANSVERSE-POSITION INFORMATION OF A MOTOR VEHICLE ON A CARRIAGEWAY AND MOTOR VEHICLE
PROCÉDÉ DE DÉTERMINATION D'UNE DONNÉE POSITION TRANSVERSALE D'UN VÉHICULE À MOTEUR SUR UNE CHAUSSÉE, ET VÉHICULE À MOTEUR

(30) Priorität: 04.02.2015 DE 102015001386
(43) Veröffentlichungstag der Anmeldung: 13.12.2017
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2016/000137
(87) Internationale Veröffentlichungsnummer: WO 2016/124316

(56) Entgegenhaltungen:
- DE-A1-102009 034 105
- DE-A1-102010 033 729
- DE-A1-102013 104 256
- US-A1- 2009 055 095
- US-A1- 2013 238 192
- US-A1- 2014 012 491
- US-A1- 2014 118 182
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zur Ermittlung einer Querpositionsinformation eines Kraftfahrzeugs auf einer Fahrbahn und ein Kraftfahrzeug.

Für Kraftfahrzeuge wurden Fahrerassistenzsysteme vorgeschlagen, mit denen ein Fahrer auf mehrspurigen Straßen, auf denen mithin die Fahrbahn in verschiedene Fahrspuren unterteilt ist, unterstützt werden kann. Hierzu wird üblicherweise ermittelt, auf welcher Fahrspur sich das eigene Kraftfahrzeug befindet. Um eine derartige Spurzuordnung zu ermitteln, werden üblicherweise die Kameradaten einer Kamera ausgewertet, die auf das Vorfeld des Kraftfahrzeugs gerichtet ist. Durch Bildverarbeitung können die markierten Linien auf der Fahrbahn erkannt werden, wobei gestrichelte bzw. unterbrochene Fahrspurmarkierungen von durchgezogenen Fahrspurmarkierungen unterschieden werden können. Ebenso denkbar ist eine Unterscheidung von Fahrbahnmarkierungen nach ihrer Farbe, beispielsweise, ob es sich um gelbe oder weiße Markierungen handelt. Dies ermöglicht es zusammenfassend, durch Auswertung mehrerer Fahrspurmarkierungen und der bekannten relativen Position des eigenen Kraftfahrzeugs zu den Fahrspurmarkierungen zu erkennen, auf welcher Fahrspur, beispielsweise linke, mittlere oder rechte Fahrspur, sich das eigene Kraftfahrzeug befindet.

Die Querpositionsinformation der Spurzuordnung ermöglicht es, bestimmte Fahrmanöver und/oder kritische Fahrsituationen besser interpretieren zu können. Hierdurch können die Fehl- und Falschauslösungen stark reduziert werden und die Qualität der Fahrerassistenzsysteme wird gesteigert. Beispiele für derartige Fahrerassistenzsysteme umfassen Spurhaltesysteme (LDW - Lane Departure Warning), Spurwechselassistenten und auch selbst Querführungseingriffe vornehmende Fahrerassistenzsysteme.

Dabei tritt jedoch das Problem auf, dass die Leistungsfähigkeit optischer Sensoren, insbesondere der genannten Kamera, durch Wettereinflüsse und/oder Verschmutzungen auf der Optik stark beeinträchtigt wird. So können bei einer Sichteinschränkung der Kamera die Fahrspurmarkierungen nur zum Teil oder gar nicht erkannt werden, so dass als Konsequenz Fehl- und Falschwarnungen entstehen können. Ein weiterer Nachteil von Kameras ist die starke Absenkung der Detektionsrate bei schlechten Lichtverhältnissen, beispielsweise bei Dunkelheit.

Problematisch ist ferner, dass bei vielen Straßen die Fahrspurmarkierungen nicht mehr eindeutig erkennbar sind, beispielsweise, weil sie veraltet oder zerstört sind. Schließlich existieren auch Straßen, beispielsweise im ländlichen Bereich, in denen Fahrspurmarkierungen überhaupt nicht vorhanden sind. Viele Fahrerassistenzsysteme, die auf einer optischen Erkennung von Fahrspurmarkierungen aufbauen, sind in Situationen, in denen Fahrspurmarkierungen überhaupt nicht vorhanden oder nicht eindeutig erkennbar sind, stark beeinträchtigt bzw. nicht mehr funktionsfähig.

DE 10 2013 104 256 A1 betrifft ein Verfahren und eine Vorrichtung zur Schätzung der Anzahl von Fahrspuren. Dort soll ein Umfelderfassungssystem genutzt werden, das einen Bereich seitlich-hinter einem Fahrzeug überwacht. Es wird ein Abstand zum Fahrbahnrand ermittelt und mit einem vorgebbaren Wert für eine Fahrspurbreite verglichen, wobei nicht mehr eine feste Fahrspurbreite angesetzt wird, sondern der dort behandelte Spurwechselassistent auf verschiedene Umgebungsbedingungen eingestellt werden kann. Ein solcher Umfeldsensor kann als Radarsystem ausgestaltet sein; unbewegte Objekte können beispielsweise Leitplanken, die Fahrbahn begrenzende Reflektoren oder ähnliches sein.

US 2014/0118182 A1 offenbart ein Spurerkennungsverfahren und -system. Dabei soll unter Verwendung eines Radars und einer bildgebenden Einrichtung der Ort einer aktuellen Fahrspur, auf welcher ein Fahrzeug fährt, bestimmt werden, wobei eine Gesamtbreite der Straße basierend auf den Orten feststehender Objekte auf der linken Seite und der rechten Seite ermittelt wird, die Breite der aktuellen Fahrspur aus der Fotographie bestimmt wird und dann die Spur in Bezug auf die Straße anhand der ermittelten Breiten bestimmt wird.

US 2014/0012491 A1 betrifft eine Fahrunterstützungsvorrichtung und ein Fahrunterstützungsverfahren, bei dem Assistenz und/oder Warnungen im Fall eines drohenden Verlassens der Fahrspur gegeben werden soll. Es handelt sich somit um einen klassischen Spurhalteassistenten. Die Grenze zwischen Asphalt und Kies wird als erkennbar aus Bilddaten der dortigen Kamera diskutiert.

DE 10 2009 034 105 A1 betrifft eine Vorrichtung und ein Verfahren zur Lenkunterstützung eines Fahrers eines Fahrzeugs. Mittels ersten Mitteln sollen mehrere eine Fahrspur des Fahrzeugs begrenzende Objekte erfassbar sein und aktuelle Abstände vom Fahrzeug zu den einzeln erfassten Objekten bestimmbar sein. Ein zweites Mittel ordnet jedem der Objekte eine vorgebbare Zusatz-Lenkcharakteristik zu, ein drittes Mittel ist geeignet, Zusatzlenkmomente auf eine Lenkung des Fahrzeugs aufzubringen. Bilddaten der Objekte werden aufgenommen, um diese aufgrund ihrer Art, Gestalt, Form, Farbe, Oberflächenstruktur, etc. klassifizieren zu können, um die Zuordnung der entsprechenden Lenkcharakteristik zu erlauben. Lediglich zusätzlich können Radarsensoren eingesetzt werden, um die laterale Position des Fahrzeugs in Relation zu jeweiligen Objekten zu ermitteln.

DE 10 2010 033 729 A1 betrifft ein Verfahren und um eine Vorrichtung zum Bestimmen der Position eines Fahrzeugs auf einer Fahrbahn sowie einen Kraftwagen mit einer solchen Vorrichtung. Die Idee dort ist es, möglichst viele Informationen miteinander zu kombinieren, insbesondere auch die eines Umfeldsensors, um mit zumindest fahrspurspezifischer Genauigkeit die Position des Kraftfahrzeugs auf der Fahrbahn zu bestimmen. Radarsensoren sind bezüglich großer, ausgedehnter Objekte genannt.

Der Erfindung liegt daher die Aufgabe zugrunde, eine alternative, von Fahrspurmarkierungen unabhängige Möglichkeit zur Ermittlung einer eine Querposition eines Kraftfahrzeugs auf einer Fahrbahn beschreibenden Querpositionsinformation anzugeben.

Zur Lösung dieser Aufgabe ist erfindungsgemäß ein Verfahren mit den Merkmalen des Anspruch 1 vorgesehen.

Die Erfindung schlägt also eine Möglichkeit zur Ermittlung einer Querpositionsinformation vor, die ausschließlich auf der Auswertung von Radardaten als Messdaten basiert. Moderne Radarsysteme, auf die später noch genauer eingegangen werden wird, erlauben eine hochgenaue Erfassung des Umfelds des Kraftfahrzeugs, so dass es mithin möglich ist, Fahrbahnbegrenzungen der aktuell befahrenen Straße in den Radardaten zu detektieren, wobei Umgebungsmerkmale analysiert werden, die die Lage der Fahrbahnbegrenzung beschreiben. Es ist vorgesehen, dass als Umgebungsmerkmal ein Übergang von dem Fahrbahnbelag zu einem anderen Untergrund detektiert und lokalisiert wird. Weiterhin können als Umgebungsmerkmale Leitplanken und/oder Leitpfosten und/oder ein Bordstein und/oder ein Randbebauungsobjekt und/oder Pflanzen detektiert und lokalisiert werden. Aufgrund der Genauigkeit der Daten des Radarsensors ist es in einer Auswertung möglich, Umgebungsmerkmale zu klassifizieren und somit rückzuschließen, ob es sich beispielsweise um ein Objekt handelt, das sich zwangsläufig nicht auf der Fahrbahn befinden kann, mithin ein Hinweis auf die Fahrbahnbegrenzung sein muss. Erfindungsgemäß ist es sogar möglich, aufgrund der Verwendung von auf Halbleitertechnologie basierenden, hochgenauen Radarsensoren, den Übergang vom Fahrbahnbelag zu einem anderen Untergrund selbst zu detektieren, so dass unmittelbar die Fahrbahnbegrenzung abgeleitet werden kann. Idealerweise werden dabei die Umgebungsmerkmale über einen bestimmten Abschnitt der Fahrbahn in Fahrtrichtung und/oder über einen bestimmten Zeitraum betrachtet, um ein möglichst genaues Maß für die Lage der Fahrbahnbegrenzungen zu erhalten. Ist erst die Lage der Fahrbahnbegrenzungen im Kraftfahrzeugkoordinatensystem bekannt, folgt hieraus unmittelbar der seitliche Abstand des Kraftfahrzeugs zu den Fahrbahnbegrenzungen, mithin die Lateralabstände. Zusammenfassend kann also durch Detektion und Bewertung von Radardaten zur Fahrbahn und den Randobjekten bzw. Randmerkmalen eine Aussage über die Lateralabstände des Kraftfahrzeugs zum Fahrbahnrand links und rechts getroffen werden. Dabei handelt es sich bereits um eine nutzbare Querpositionsinformation, die beispielsweise zur Plausibilisierung anderer Ergebnisse eingesetzt werden kann.

Mit Hilfe der vorliegenden Erfindung ist also eine gute Abschätzung der Querposition eines Kraftfahrzeugs auf der Fahrbahn ausschließlich mit einem hochauflösenden Radarsystem mit wenigstens einem Radarsensor möglich, ohne dass eine Bildverarbeitung von Kameradaten oder verwandte Technologien eingesetzt werden müssen. Hierbei wird der Radarsensor nicht eingesetzt, um Fahrspurmarkierungen zu detektieren, sondern es wird die Fahrbahnbegrenzung aus den Radardaten extrahiert, woraus sich Abstände zur linken und zur rechten Fahrbahnbegrenzung ergeben. Dabei sei an dieser Stelle sicherheitshalber nochmals darauf hingewiesen, dass sich die relative Position des Kraftfahrzeugs zu betrachteten Umgebungsmerkmalen und mithin der Fahrbahnbegrenzung bereits aus der Natur der Radarmessung ergibt, wobei insbesondere Radarsensoren verwendet werden, die eine Winkelauflösung in zwei zueinander senkrechten Ebenen erlauben. Die diesbezügliche Auswertung der Radardaten ist im Stand der Technik weitgehend bekannt.

Eine besonders vorteilhafte Ausgestaltung der vorliegenden Erfindung ergibt sich, wenn mehrere, das Umfeld des Kraftfahrzeugs in einem kompletten 360°-Winkelbereich erfassende Radarsensoren, insbesondere acht Radarsensoren, verwendet werden. Auf diese Weise ist eine äußerst große Datenbasis zur Ermittlung der Lage der Fahrbahnbegrenzung gegeben, so dass es insbesondere möglich wird, die Querpositionsinformation in jedem Messzyklus der Radarsensoren neu zu bestimmen, nachdem ohnehin Daten über eine gewisse Länge der Fahrbahn vorliegen. Die Radardaten der verschiedenen Radarsensoren können vor der beschriebenen Auswertung zu einer hochaufgelösten Umfeldkarte kombiniert werden, aus der die Umfeldmerkmale extrahiert werden können. Als besonders zweckmäßig hat sich eine Anordnung erwiesen, die acht um das Kraftfahrzeug verteilte Radarsensoren nutzt, beispielsweise drei im vorderen Stoßfänger angeordnete Radarsensoren, drei im hinteren Stoßfänger angeordnete Radarsensoren und zwei im Bereich der Türen, insbesondere innerhalb der Türen, verbaute Radarsensoren.

Die Erfindung sieht vor, dass der wenigstens eine Radarsensor auf einer Halbleitertechnologie basiert, wobei als der wenigstens eine Radarsensor ein Radarsensor mit einem den Radartransceiver realisierenden Halbleiterchip, insbesondere CMOS-Chip, verwendet wird.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin ist es auch im Rahmen der vorliegenden Erfindung zweckmäßig, wenn durch den Halbleiterchip auch eine digitale Signalverarbeitungskomponente und/oder eine Steuereinheit des Radarsensors realisiert werden und/oder der Halbleiterchip und eine Antennenanordnung des Radarsensors als ein Package realisiert sind.

Die vorliegende Erfindung nutzt mithin die Verfügbarkeit neuer Radartechnologien aus, die auch in näher am Kraftfahrzeug gelegenen Erfassungsbereichen eine hochauflösende Abtastung des Umfelds des Kraftfahrzeugs erlauben. Beispielsweise können so Radarsensoren geschaffen werden, die eine Reichweite von bis zu 50 m aufweisen und dennoch eine hohe Abstandsauflösung, insbesondere auch im Nahbereich, bieten. Durch solche hohen Auflösungen im cm- oder gar im mm-Bereich wird eine Extraktion der Umfeldmerkmale, wie beschrieben, in hervorragender Qualität möglich. Ein wesentlicher Beitrag der Halbleitertechnologie herbei ist auch, dass aufgrund der kurzen Signalwege ein niedriges Signal-Zu-Rausch-Verhältnis auftritt und eine Eignung für hohe Frequenzen und größere, variablere Frequenzbandbreiten gegeben ist.

In diesem Kontext sieht eine zweckmäßige Ausgestaltung der vorliegenden Erfindung vor, dass der wenigstens eine Radarsensor mit einer Frequenzbandbreite größer als 1 GHz, insbesondere 4 GHz, und/oder in einem Frequenzbereich von 77 - 81 GHz betrieben wird. Eine größere Frequenzbandbreite hat den Vorteil, dass geringere Abstände auflösbar sind, mithin zur hervorragenden Auflösung der Radarsensoren beigetragen wird, die bevorzugt in Halbleitertechnologie realisiert sind.

Gemäß der Erfindung wird die Querpositionsinformation unter zusätzlicher Berücksichtigung wenigstens einer wenigstens die Anzahl der Fahrspuren der Fahrbahn beschreibenden Zusatzinformation eine Spurzuordnung des Kraftfahrzeugs bestimmt. Ist, beispielsweise aus digitalen Kartendaten eines Navigationssystems des Kraftfahrzeugs, bekannt, wie viele Fahrspuren die aktuell befahrene Straße, mithin die Fahrbahn, aufweist, lässt sich aus der aufgrund der Lateralabstände bekannten relativen Position des Kraftfahrzeugs auf der Straße die Fahrspur, auf der sich das Kraftfahrzeug befindet, wenigstens abgeschätzt ermitteln. Befindet sich das Kraftfahrzeug bei einer dreispurigen Straße beispielsweise eher mittig, ist davon auszugehen, dass es sich auf der mittleren Fahrspur befindet. Über eine solche Abschätzung hinaus kann jedoch auch eine genauere Bestimmung der Spurzuordnung ermöglicht werden, wenn genauere (nicht gemessene) Zusatzinformationen vorliegen.

Die Erfindung sieht vor, dass eine aus digitalen Kartendaten, insbesondere den digitalen Kartendaten eines Navigationssystems, abgeleitete Fahrbahnaufteilungsinformation als Zusatzinformation berücksichtigt wird. Ferner kann eine insbesondere länderspezifische Fahrspurbreite als Zusatzinformation berücksichtigt werden. Bereits heute enthalten digitale Kartendaten von Navigationssystemen eine Spuranzahl, das bedeutet, jedem Straßenabschnitt, der durch die digitalen Kartendaten beschrieben wird, ist eine Anzahl der dort vorhandenen Fahrspuren zugeordnet, die im Rahmen der vorliegenden Erfindung genutzt werden kann. Ansätze zur Erweiterung solcher digitaler Kartendaten wurden bereits vielfältig vorgeschlagen, wobei eine solche denkbare Erweiterung besonders zweckmäßig auch gegebenenfalls vorhandene, nicht für Fahrspuren genutzte Anteile der Fahrbahn betrifft. Derartige Anteile können beispielsweise für Fahrräder reserviert sein oder einen Seitenstreifen darstellen. Mithin sieht das Verfahren vor, dass die Fahrbahnaufteilungsinformation eine das Vorhandensein und/oder die Breite und/oder die Lage eines nicht als Fahrspur genutzten Fahrbahnanteils beschreibende Anteilsinformation umfasst. Die Fahrbahnaufteilungsinformation kann ferner eine Spuranzahl umfassen.

Liegen eine Spuranzahl und, falls vorhanden, eine Anteilsinformation vor, lässt sich eine äußerst genaue Spurzuordnung mit dem erfindungsgemäßen Verfahren ermitteln, wobei zunächst angemerkt, sei, dass bereits die bislang vorliegenden Informationen, also die Lateralabstände, eine Ermittlung der Fahrbahnbreite erlauben, solange, was üblicherweise der Fall ist, die Breite des Kraftfahrzeugs innerhalb des Kraftfahrzeugs vorliegt; alternativ kann die Fahrbahnbreite jedoch auch aus dem ja detektierten Verlauf der Fahrbahnbegrenzungen unmittelbar ermittelt werden. Aus den Lateralabständen und einer im Kraftfahrzeug hinterlegten Breite des Kraftfahrzeugs und/oder aus dem Abstand der Fahrbahnbegrenzungen kann also eine Fahrbahnbreite ermittelt werden. Nun ist es auf besonders vorteilhafter Weise möglich, Intervalle der Fahrbahnbreite wenigstens teilweise aufgrund der Fahrbahnaufteilungsinformation Fahrspuren zuzuordnen, wobei die Spurzuordnung aufgrund der durch die Lateralabstände bekannten Position des Kraftfahrzeugs entlang der Fahrbahnbreite erfolgt. Letztlich wird also überprüft, ob die Querposition des Kraftfahrzeugs eine möglichst genaue Spurzuordnung ermöglicht, nachdem die Querposition des Kraftfahrzeugs üblicherweise innerhalb wenigstens eines der Intervalle liegen wird. Befindet sich das Kraftfahrzeug vollständig in einem einer Fahrspur zugeordneten Intervall, ist die Spurzuordnung eindeutig möglich, ansonsten kann beispielsweise ein Schwellwert vorgegeben werden, welcher Anteil des Kraftfahrzeugs in einem einer Fahrspur zugeordneten Intervall liegen muss, um dieser zugeordnet zu sein. Befindet sich das Kraftfahrzeug beispielsweise in einer Querposition, dass es zu gleichen Anteilen in zwei benachbarten Fahrspuren liegt, kann auch eine Unmöglichkeit der Spurzuordnung ein Rückgabewert sein, bevorzugt ist es jedoch, als Querpositionsinformation Wahrscheinlichkeitswerte dafür zu ermitteln, dass sich das Kraftfahrzeug in einer bestimmten Fahrspur befindet, welche beispielsweise auf dem Anteil des Kraftfahrzeugs basieren können, der in dem zugeordneten Intervall liegt. Ersichtlich sind hier verschiedene Ausgestaltungen denkbar.

Dies sei anhand eines Beispiels näher dargelegt. Sind beispielsweise als Lateralabstände links 0,5 m und rechts 4,5 m gemessen worden und beträgt die Breite des Kraftfahrzeugs 2 m, ergibt sich eine Fahrbahnbreite von 7 m. Ist nun ferner bekannt, dass die Spuranzahl zwei beträgt und die Fahrspurbreite, beispielsweise typisch für Deutschland 3,5 m beträgt, ohne dass ein nicht für Fahrspuren genutzter Anteil vorliegt, wird jeder der beiden Fahrspuren mithin die Hälfte der Fahrbahn zugeordnet. Aus den oben genannten Lateralabständen ergibt sich unmittelbar, dass sich das Kraftfahrzeug auf der linken Spur befindet.

Die Robustheit dieses Vorgehens kann noch erhöht werden, wenn die gemessenen Lateralabstände, die sich daraus ergebenden Fahrbahnbreiten und die Zusatzinformationen gegeneinander plausibilisiert werden. So sieht eine vorteilhafte Weiterbildung bei Ermittlung einer Fahrbahnbreite aus den Lateralabständen und der im Kraftfahrzeug hinterlegten Breite des Kraftfahrzeugs sowie aus dem Abstand der Fahrbahnbegrenzungen vor, dass eine Plausibilisierung der aus Radardaten bestimmten Fahrbahnbreiten gegeneinander erfolgt und/oder eine Plausibilisierung der Spuranzahl und/oder der Fahrspurbreite als Plausibilisierungswerte durch Ermittlung von Vergleichswerten aus der Fahrbahnbreite, falls vorhanden der Anteilsinformation und dem jeweils anderen Plausibilisierungswert erfolgt. Auf diese Weise wird letztlich überprüft, ob die Zusatzinformation tatsächlich eine Beschreibung der durch die Radarsensoren vermessenen Fahrbahn darstellen kann.

Eine konkrete Ausführung der vorliegenden Erfindung kann beispielsweise vorsehen, dass in einem ersten Schritt plausibilisiert wird, ob die anhand der Lateralabstände vermessene Fahrbahnbreite mit der sich aus den Fahrbahnbegrenzungen ergebenden Fahrbahnbreite übereinstimmt. In einem zweiten Schritt kann plausibilisiert werden, ob die gemessene Fahrspurbreite geteilt durch die Spuranzahl einen plausiblen Wert für die typische Fahrspurbreite, wie sie in den Zusatzinformationen enthalten sein kann, ergibt. In einem dritten Schritt kann plausibilisiert werden, ob die Spuranzahl korrekt ist, indem die gemessene Fahrbahnbreite (gegebenenfalls), wie auch im vorangegangenen zweiten Schritt, reduziert um den nicht als Fahrspur genutzten Fahrbahnanteil, geteilt durch die in den Zusatzinformationen enthaltene typische Fahrspurbreite die korrekte Spuranzahl der Zusatzinformationen ergibt. Sind diese drei Plausibilisierungen erfolgreich, kann in einem vierten Schritt die Ermittlung der Spurzuordnung erfolgen.

Bei der Ermittlung einer Spurzuordnung als Querpositionsinformation kann eine weitere Verbesserung erreicht werden, wenn bei der Ermittlung der Spurzuordnung wenigstens ein in den Radardaten detektiertes, querversetztes Kraftfahrzeug berücksichtigt wird. Wird das eigene Kraftfahrzeug beispielsweise gemäß der Radardaten links überholt, und überholt selbst rechts Kraftfahrzeuge, lässt sich schlussfolgern, dass sich das Kraftfahrzeug auf der mittleren von drei Spuren befinden muss, und dergleichen. Aus den Radardaten ableitbare Informationen über andere Verkehrsteilnehmer stellen mithin ein nützliches Mittel dar, um die Ableitung einer Spurzuordnung zu verbessern.

Es kann vorgesehen sein, dass die Ermittlung der Querpositionsinformation auf wenigstens einen Straßentyp, insbesondere Autobahnen, eingeschränkt wird. Dies kann zweckmäßig sein, wenn eine Spurzuordnung erfolgen soll und eine möglichst feste Vorgabe für die Fahrspurbreite berücksichtigt werden soll, welche in verschiedenen Ländern für bestimmte Straßentypen vorliegt. Ein weiterer Straßentyp, der zum Einsatz des erfindungsgemäßen Verfahrens zweckmäßig ist, sind Landstraßen mit mehreren Fahrspuren in einer Richtung, mehrere Fahrspuren im Stadtverkehr und dergleichen. Eine Information zum Straßentyp kann beispielsweise auch aus digitalen Kartendaten eines Navigationssystems abgeleitet werden.

Die Querpositionsinformation kann beispielsweise zur Plausibilisierung einer Spurzuordnung auf der Grundlage von Kameradaten einer Kamera und/oder als Rückfallebene bei Auswahl der Kamera verwendet werden. Insbesondere weist das Kraftfahrzeug also ein Fahrerassistenzsystem auf, in dem die Spurzuordnung für wenigstens eine Funktion genutzt wird, beispielsweise im Rahmen eines Spurverlassenswarners oder eines Spurwechselassistenten. Wie bereits erwähnt wurde, sind Kameras nicht immer verlässlich, so dass die Querpositionsinformation, die aus den Radardaten bestimmt wurde, zur Plausibilisierung der Spurzuordnung dienen kann. Schlägt die Plausibilisierung fehl, können je nach Verlässlichkeit der entsprechenden Daten Einschränkungen im Funktionsumfang vorgenommen werden oder gar die Querpositionsinformation aus den Radardaten statt der Querpositionsinformation aus den Kameradaten und/oder zu deren Korrektur eingesetzt werden. Denkbar ist es zudem, bei Ausfall der Kamera, was auch gilt, wenn festgestellt wird, dass deren Optik verschmutzt ist oder dergleichen, sowie die Kameradaten gar keine Informationen zu Fahrspuren liefern können, beispielsweise wenn keine Fahrspurmarkierungen vorhanden sind, die Querpositionsinformationen aus den Radardaten verwendet wird, insbesondere dann, wenn diese selbst eine Spurzuordnung enthält. Mithin stellt das erfindungsgemäße Verfahren eine hervorragende Ergänzung zur Verwendung einer Kamera dar.

Insbesondere kann in diesem Kontext vorgesehen sein, dass der Querpositionsinformation ein Konfidenzwert zugeordnet wird, welcher bei der Plausibilisierung und/oder der Verwendung als Rückfallebene berücksichtigt wird. Dabei kann der Konfidenzwert von Fehlerwerten bei der Bestimmung der Lateralabstände und/oder den Zusatzinformationen zugeordneten Verlässlichkeitsinformationen und/oder dem Fehlen von Zusatzinformationen und/oder den Ergebnissen einer Plausibilisierung von Messwerten gegen Zusatzinformationen abhängig sein.

Neben dem Verfahren betrifft die Erfindung auch ein Kraftfahrzeug, aufweisend wenigstens einen Radarsensor und einen zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin auch die genannten Vorteile erhalten werden können. Insbesondere kann das Kraftfahrzeug auch wenigstens ein Fahrerassistenzsystem aufweisen, das die Querpositionsinformation, die im Rahmen des erfindungsgemäßen Verfahrens ermittelt wurde, nutzt.

Weitere Vorteile und Einzelheiten der vorliegenden Erfindung ergeben sich aus den im Folgenden dargestellten Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: einen dabei eingesetzten Radarsensor,
- Fig. 3: ein erfindungsgemäßes Kraftfahrzeug, und
- Fig. 4: das Kraftfahrzeug auf einer zweispurigen Straße.

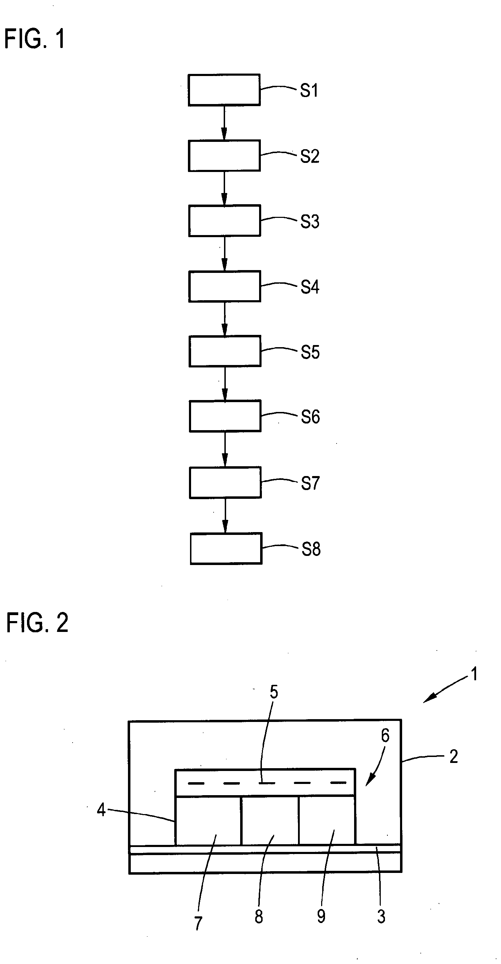

Fig. 1 zeigt einen Ablaufplan eines Ausführungsbeispiels des erfindungsgemäßen Verfahrens zur Ermittlung einer Querpositionsinformation eines Kraftfahrzeugs auf einer Fahrbahn. Dabei werden in einem Schritt S1 Radarsensoren des Kraftfahrzeugs verwendet, die auf wenigstens einen Teil der Fahrbahn und ihre Umgebung gerichtet sind. Es werden Radarsensoren auf einer CMOS-Basis verwendet, wobei Fig. 2 beispielhaft einen derartigen Radarsensor 1 zeigt. Dieser weist ein Gehäuse 2 auf, in dem eine Leiterplatte 3 gehaltert ist. Auf der Leiterplatte 3 ist ein Halbleiterchip 4, hier ein CMOS-Chip, angeordnet, der zusammen mit einer Antennenanordnung 5 des Radarsensors 1 ein Package 6 bildet. Durch den Halbleiterchip 4 werden neben einem Radartransceiver 7 auch eine digitale Signalverarbeitungskomponente 8 (DSP) und eine Steuereinheit des Radarsensors 1 realisiert. Derartige Radarsensoren 1 lassen sich äußerst kleinbauend realisieren und ermöglichen eine hochauflösende Abtastung des Umfelds eines Kraftfahrzeugs auch bei kürzeren Abständen. Es lassen sich hohe Frequenzen der Radarstrahlung sowie hohe Frequenzbandbreiten erzielen, was weiter der Leistungsfähigkeit bei der hochauflösenden Umfeldabtastung zuträglich ist. Vorliegend werden die Radarsensoren 1 des Kraftfahrzeugs mit einer Frequenzbandbreite von 4 GHz im Frequenzbereich von 77 - 81 GHz betrieben, was eine hervorragende Abstandsauflösung ermöglicht.

Die Radarsensoren 1 können sehr klein realisiert werden, beispielsweise mit einer Größe von 3 cm x 3 cm oder kleiner. Sie lassen sich dementsprechend bauraumsparend verbauen. Zweckmäßigerweise ist die Antennenanordnung 5 ausgebildet, eine Winkelauflösung in zwei Richtungen zu ermöglichen, so dass Merkmale, die durch Reflektionen vermessen wurden, in ihrer dreidimensionalen Position im Raum zugeordnet werden können. Ferner handelt es sich bei den Radarsensoren 1 zweckmäßig um Weitwinkel-Radarsensoren.

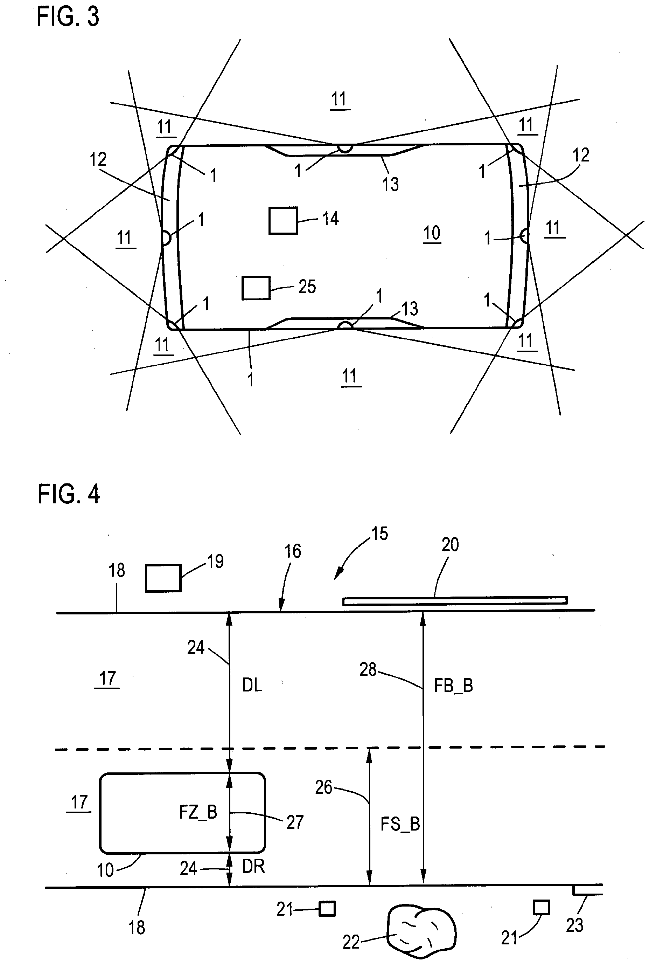

Entsprechend zeigt Fig. 3 eine Prinzipskizze eines erfindungsgemäßen Kraftfahrzeugs 10, bei dem unter Nutzung von acht Radarsensoren 1 eine 360°-Abtastung des Umfelds des Kraftfahrzeugs 10 erreicht werden kann. Zur Veranschaulichung sind die Erfassungsbereiche 11 der Radarsensoren 1, die als Weitwinkel-Radarsensoren ausgebildet sind, gezeigt. Überlappungsbereiche können genutzt werden, um die Radardaten gegeneinander zu plausibilisieren.

Jeweils drei der Radarsensoren 1 sind in den vorderen und hinteren Stoßfängern 12 des Kraftfahrzeugs 10 verbaut, die das seitliche Umfeld abtastenden Radarsensoren 1 in Türen 13. Während Stoßfänger 12 meist ohnehin aus einem für Radarstrahlung durchlässigen Material bestehen, ist es bei den Türen 13 denkbar, entsprechende Fenster in Blechteilen vorzusehen und durch ein radardurchlässiges Material zu überdecken, welches überlackiert wird, so dass der Radarsensor 1 von außen nicht sichtbar ist. Die Radardaten der Radarsensoren 1, die im Schritt S1 aufgenommen werden, werden einem Steuergerät 14 des Kraftfahrzeugs 10 zugeführt, welches zur Durchführung des erfindungsgemäßen Verfahrens ausgebildet ist. Hierzu werden die Radardaten zunächst in einem Schritt S2 zu einer hochauflösenden Karte des Umfelds des Kraftfahrzeugs zusammengefasst. Dies ermöglicht es in einem Schritt S3, Umfeldmerkmale aus ihnen zu extrahieren, die die Lage der Begrenzung der Fahrbahn, auf der das Kraftfahrzeug 10 betrieben wird, anzeigen.

In Fig. 4 ist ein Kraftfahrzeug 10 beispielhaft auf einer Straße 15 gezeigt, hier einer Fahrtrichtung einer Autobahn, deren Fahrbahn 16 zwei Fahrspuren 17 aufweist. Ein wichtiges Umgebungsmerkmal, das in den Radardaten, die hochauflösend genug sind, detektiert werden kann, ist dabei der Übergang 18 vom Fahrbahnbelag zu einem anderen Untergrund, welcher die beste Hinweise auf den Verlauf der Fahrbahnbegrenzung bietet. Jedoch geben auch weitere Umgebungsmerkmale Hinweise auf den Verlauf bzw. die Lage der Fahrbahnbegrenzung, beispielsweise Randbebauungsobjekte 19, Leitplanken 20, Leitpfosten 21, neben der Straße befindliche Pflanzen 22 und gegebenenfalls vorhandene Bordsteine 23.

Nachdem all diese Umgebungsmerkmale in den Radardaten identifiziert und lokalisiert werden können, lässt sich aus ihnen ein Verlauf der Fahrbahnbegrenzung ableiten, was im Schritt S4 gemäß Fig. 1 geschieht.

Ist der Verlauf der Fahrbahnbegrenzung relativ zum Kraftfahrzeug 10 aber erst bekannt, ergeben sich unmittelbar die Lateralabstände 24 des Kraftfahrzeugs 10 zur linken und zur rechten Fahrbahnbegrenzung, die in Fig. 4 mit DL und DR bezeichnet sind. Diese Lateralabstände 24 als erste Querpositionsinformation werden im Schritt S5 bestimmt.

Hiermit ist das erfindungsgemäße Verfahren jedoch noch nicht abgeschlossen, nachdem in einem in Fig. 3 angedeuteten Navigationssystem 25 des Kraftfahrzeugs 10 digitale Kartendaten vorliegen, aus denen Zusatzinformationen zur weiteren Auswertung der Lateralabstände 24 folgen. Als Zusatzinformationen aus den digitalen Kartendaten werden vorliegend Fahrbahnaufteilungsinformationen der aktuelle befahrenen Fahrbahn 16/Straße 15 verwendet, die eine Spuranzahl und Anteilsinformationen umfassen, wobei letztere das Vorhandensein, die Bereite und die Lage eines nicht als Fahrspur 17 genutzten Fahrbahnanteils beschreiben. Zur Vereinfachung der Darstellung ist ein solcher Fahrbahnanteil in Fig. 4 nicht dargestellt. Ein solcher Fahrbahnanteil kann beispielsweise eine Fahrradspur oder ein Seitenstreifen sein.

Ebenso in den digitalen Kartendaten abgelegt oder anderweitig verfügbar ist als weitere Zusatzinformation eine insbesondere länderspezifische Fahrbahnbreite 26, die in Fig. 4 als FS_B bezeichnet ist. Schließlich ist in dem Kraftfahrzeug 10 auch eine Breite 27 des eigenen Kraftfahrzeugs 10 enthalten, die in Fig. 4 mit FZ_B bezeichnet ist. Aus den jeweiligen Fahrbahnaufteilungsinformationen lässt sich eine Fahrbahnbreite 28 ableiten, die in Fig. 4 als FB_B bezeichnet wird.

Diese Zusatzinformation gemeinsam mit den Lateralabständen 24 wird nun in den Schritten S6 und S7 genutzt, um weitere Querpositionsinformationen zu ermitteln, wobei an dieser Stelle angemerkt sei, dass auch Ausführungsbeispiele der vorliegenden Erfindung denkbar sind, in denen nur die Spuranzahl bekannt ist, sich jedoch eine Spurzuordnung auch erreichen lässt, nachdem die Lateralabstände 24 die Querposition des Kraftfahrzeugs 10 auf der Fahrbahn 16 recht klar beschreiben, wobei eine derartige Spurzuordnung noch verbessert wird, wenn in den Radardaten detektierte, querversetzte Kraftfahrzeuge, die mithin auf anderen Fahrspuren 17 unterwegs sind, zusätzlich betrachtet werden, wobei eine derartige Betrachtung anderer Verkehrsteilnehmer auch im Rahmen der im Folgenden dargelegten konkreten Ausführungsform zweckmäßig sein kann.

Der Schritt S6 gemäß Fig. 1 steht stellvertretend für drei Plausibilisierungsschritte, wobei zunächst plausibilisiert wird, ob die gesamte vermessene Fahrbahnbreite FB_B mit der Summe der anderen vermessenen Größen DL, DR und der bekannten Fahrzeugbreite FZ_B übereinstimmt, mithin ob FB_B = DL + FZ_B + DR gilt. Dabei sei angemerkt, dass FB_B sich hauptsächlich als Abstand der detektierten Fahrbahnbegrenzungen ergeben kann und durch Radardaten der vorderen oder hinteren Radarsensoren 1 hauptsächlich bestimmt wird. DL und DR werden hauptsächlich durch die seitlichen Radarsensoren 1 vermessen, während FZ_B, wie bereits beschrieben, für das eigene Kraftfahrzeug 10 bekannt ist.

In einem zweiten Plausibilisierungsschritt des Schrittes S6 kann plausibilisiert werden, ob die Fahrspurbreite, FS_B, ermittelt durch Teilung der gemessenen Fahrbahnbreite FB_B durch die Spuranzahl einen plausiblen Wert für die Fahrspurbereite FL_B ergibt, wie er im Kraftfahrzeug vorgehalten wird, wobei gegebenenfalls selbstverständlich auch Anteilsinformationen mitberücksichtigt werden, indem der nicht für Fahrspuren genutzte Fahrbahnanteil zunächst von der gemessenen Fahrspurbreite FB_B abgezogen wird. In einem abschließenden, dritten Plausibilisierungsschritt wird plausibilisiert, ob die Anzahl der Fahrspuren 17 korrekt ist, denn durch Aufteilung der gemessenen Fahrbahnbreite FB_B durch die im Kraftfahrzeug 10 vorliegende Fahrspurbreite FS_B sollte sich die Spuranzahl ergeben. Gelingen diese Plausibilisierungen (innerhalb einer vorgegebenen Toleranz), wird mit dem Schritt S7 fortgefahren (vgl. Fig. 1).

Dort kann nun die Spurzuordnung des Kraftfahrzeugs 10 ermittelt werden, wozu in der Fahrbahnbreite FB_B Intervalle ermittelt werden, die bestimmten Fahrspuren 17 zugeordnet sind. Liegt das Kraftfahrzeug 10, beschrieben durch die Lateralabstände DL und DR, zumindest zum größten Teil innerhalb eines solchen Intervalls, kann die Spurzuordnung getroffen werden.

Die Schritte 6 und 7 seien anhand eines konkreten Beispiels, insbesondere bezogen auf Fig. 4, nochmals genauer erläutert Dabei sei von folgenden Werten ausgegangen: FB_B = 7 m, DL = 0,5 m, DR = 4,5 m, FZ_B = 2,0 m, Spuranzahl N = 2, die länderspezifische, im Kraftfahrzeug 10 abgelegte Fahrspurbreite FS_B = 3,5 m. Im ersten Plausibilisierungs-Teilschritt des Schrittes S6 ergibt sich dann als errechnete Fahrbahnbreite FB_B 0,5 m + 2,0 m + 4,5 m, was ersichtlich der gemessenen Fahrbahnbreite FB_B entspricht, so dass die Plausibilisierung gelungen ist. Im zweiten Plausibilisierungs-Teilschritt ergibt sich als errechnete Fahrspurbreite FS_B 7/2 = 3,5 m, was mit der typischen, vorbekannten Fahrspurbereite übereinstimmt, so dass auch hier die Plausibilisierung erfolgreich ist. Im dritten Plausibilisierungs-Teilschritt wird die gemessene Fahrbahnbreite FB_B durch die vorgegebene, typische Fahrspurbreite geteilt, so dass sich 7 m / 3,5 m = 2 ergibt, was der Spuranzahl N aus den digitalen Kartendaten entspricht. Auch diese Plausibilisierung ist gelungen.

Schließlich ergibt sich im Schritt S7 aus DL = 0,5 m und DR = 4,5 m, dass sich das Kraftfahrzeug auf der linken Fahrspur 17 befinden muss.

Im abschließenden Schritt S8, vgl. wiederum Fig. 1, werden nun die ermittelten Querpositionsinformationen in einem Fahrerassistenzsystem des Kraftfahrzeugs 10 genutzt, beispielsweise zur Plausibilisierung von aus Kameradaten gewonnenen Spurzuordnungen und/oder auch als Rückfallebene, falls die kamerabasierte Spurzuordnung nicht möglich ist.

## Patentansprüche

1. Verfahren zur Ermittlung einer Querpositionsinformation eines Kraftfahrzeugs (10) auf einer Fahrbahn (16),
**dadurch gekennzeichnet,**
**dass** wenigstens einen Teil der Fahrbahn (16) beschreibende Radardaten mit wenigstens einem Radarsensor (1) des Kraftfahrzeugs (10) aufgenommen werden, durch Auswertung in den Radardaten die Lage einer Fahrbahnbegrenzung beschreibende Umgebungsmerkmale detektiert und lokalisiert werden, aus diesen ein Verlauf der Fahrbahnbegrenzungen der Fahrbahn (16) und Lateralabstände (24) des Kraftfahrzeugs (10) zu den Fahrbahnbegrenzungen ermittelt werden und die Querpositionsinformation als die oder in Abhängigkeit der Lateralabstände (24) des Kraftfahrzeugs (10) zu den Fahrbahnbegrenzungen ermittelt wird, wobei als der wenigstens eine Radarsensor (1) ein hochgenauer Radarsensor (1) mit einem den Radartransceiver (7) realisierenden Halbleiterchip (4) verwendet wird und als Umgebungsmerkmale ein Übergang (18) von dem Fahrbahnbelag zu einem anderen Untergrund detektiert und lokalisiert wird, wobei als Querpositionsinformation unter zusätzlicher Berücksichtigung wenigstens einer wenigstens die Anzahl der Fahrspuren (17) der Fahrbahn (16) beschreibenden Zusatzinformation eine Spurzuordnung des Kraftfahrzeugs (10) bestimmt wird, wobei eine aus digitalen Kartendaten abgeleitete Fahrbahnaufteilungsinformation, die eine das Vorhandensein und/oder die Breite und/oder die Lage eines nicht als Fahrspur (17) genutzten Fahrbahnanteils beschreibende Anteilsinformation umfasst, als Zusatzinformation berücksichtigt wird.

2. Verfahren nach Anspruch 1,
**dadurch gekennzeichnet,**
**dass** als Umgebungsmerkmale zusätzlich Leitplanken (20) und/oder Leitpfosten (21) und/oder ein Bordstein (23) und/oder ein Randbebauungsobjekt (19) und/oder Pflanzen (22) detektiert und lokalisiert werden.

3. Verfahren nach Anspruch 1 oder 2,
**dadurch gekennzeichnet,**
**dass** mehrere, das Umfeld des Kraftfahrzeugs (10) in einem kompletten 360°-Winkelbereich erfassende Radarsensoren (1), insbesondere acht Radarsensoren (1), verwendet werden.

4. Verfahren nach einem der vorangehenden Ansprüche,
**dadurch gekennzeichnet,**
**dass** ein als CMOS-Chip ausgebildeter Halbleiterchip (4) verwendet wird.

5. Verfahren nach einem der vorangehenden Ansprüche,
**dadurch gekennzeichnet,**
**dass** durch den Halbleiterchip (4) auch eine digitale Signalverarbeitungskomponente (8) und/oder eine Steuereinheit (9) des Radarsensors (1) realisiert werden und/oder der Halbleiterchip (4) und eine Antennenanordnung (5) des Radarsensors (1) als ein Package (6) realisiert sind.

6. Verfahren nach einem der vorangehenden Ansprüche,
**dadurch gekennzeichnet,**
**dass** der wenigstens eine Radarsensor (1) mit einer Frequenzbandbreite größer als 1 GHz, insbesondere 4 GHz, und/oder in einem Frequenzbereich von 77 bis 81 GHz betrieben wird.

7. Verfahren nach einem der vorangehenden Ansprüche,
**dadurch gekennzeichnet,**
**dass** die Fahrbahnaufteilungsinformation aus digitalen Kartendaten eines Navigationssystems (25) abgeleitet wird und/oder eine insbesondere länderspezifische Fahrspurbreite (26) als Zusatzinformation berücksichtigt wird.

8. Verfahren nach einem der vorangehenden Ansprüche,
**dadurch gekennzeichnet,**
**dass** die Fahrbahnaufteilungsinformation eine Spuranzahl umfasst.

9. Verfahren nach Anspruch 8,
**dadurch gekennzeichnet,**
**dass** aus den Lateralabständen (24) und einer im Kraftfahrzeug (10) hinterlegten Breite (27) des Kraftfahrzeugs (10) und/oder aus dem Abstand der Fahrbahnbegrenzungen eine Fahrbahnbreite (28) ermittelt wird, wobei eine Plausibilisierung der aus Radardaten bestimmten Fahrbahnbreiten (28) gegeneinander erfolgt und/oder eine Plausibilisierung der Spuranzahl und/oder der Fahrspurbreite (26) als Plausibilierungswerte durch Ermittlung von Vergleichswerten aus der Fahrbahnbreite (28), falls vorhanden der Anteilsinformation und dem jeweils anderen Plausibilisierungswert erfolgt und/oder Intervallen der Fahrbahnbreite (28) wenigstens teilweise aufgrund der Fahrbahnaufteilungsinformation Fahrspuren (17) zugeordnet werden, wobei die Spurzuordnung aufgrund der durch die Lateralabstände (24) bekannten Position des Kraftfahrzeugs (10) entlang der Fahrbahnbreite (28) erfolgt.

10. Verfahren nach einem der vorangehenden Ansprüche,
**dadurch gekennzeichnet,**
**dass** bei der Ermittlung der Spurzuordnung wenigstens ein in den Radardaten detektiertes, querversetztes Kraftfahrzeug berücksichtigt wird.

11. Verfahren nach einem der vorangehenden Ansprüche,
**dadurch gekennzeichnet,**
**dass** die Ermittlung der Querpositionsinformation auf wenigstens einen Straßentyp, insbesondere Autobahnen, eingeschränkt wird.

12. Verfahren nach einem der vorangehenden Ansprüche,
**dadurch gekennzeichnet,**
**dass** die Querpositionsinformation zur Plausibilisierung einer Spurzuordnung auf der Grundlage von Kameradaten einer Kamera und/oder als Rückfallebene bei Ausfall der Kamera verwendet wird.

13. Kraftfahrzeug (10), aufweisend wenigstens einen Radarsensor (1) und ein zur Durchführung eines Verfahrens nach einem der vorangehenden Ansprüche ausgebildetes Steuergerät (14).

## Claims

1. Method for acquiring transverse position information of a motor vehicle (10) on a carriageway (16),
**characterised in that**
at least a part of the radar data describing the carriageway (16) is taken with at least one radar sensor (1) of the motor vehicle (10), the environmental features describing the location of a carriageway boundary are detected and localised by evaluating the radar data, from these a path of the carriageway boundaries of the carriageway (16) and lateral distances (24) of the motor vehicle (10) from the carriageway boundaries are acquired and the transverse position information is acquired as the or as a function of the lateral distances (24) of the motor vehicle (10) from the carriageway boundaries, wherein a high-precision radar sensor (1) with a semiconductor chip (4) implemented by the radar transceiver (7) is used as the at least one radar sensor (1) and a passage (18) from the road surface to another ground surface is detected and localised as environmental features, wherein a lane position assignment of the motor vehicle (10) is determined as the transverse position information additionally taking into account at least one additional piece of information of at least the number of traffic lanes (17) of the carriageway (16), wherein carriageway distribution information derived from digital map data, which comprises partial information describing the presence and/or width and/or the location of a section of the carriageway not used as a traffic lane (17), is taken into account as the additional piece of information.

2. Method according to Claim 1,
**characterised in that**
additional crash barriers (20) and/or delineators (21) and/or a curb (23) and/or a roadside object (19) and/or plants (22) are detected and localised as environmental features.

3. Method according to Claim 1 or 2,
**characterised in that**
a plurality of radar sensors (1), in particular eight radar sensors (1), acquiring the environment of the motor vehicle (10) in a complete 360° angle range are used.

4. Method according to any one of the preceding claims,
**characterised in that**
a semiconductor chip (4) configured as a CMOS chip is used.

5. Method according to any one of the preceding claims,
**characterised in that**
a digital signal processing component (8) and/or a control unit (9) of the radar sensor (1) are implemented by the semiconductor chip (4) and/or the semiconductor chip (4) and an antenna arrangement (5) of the radar sensor (1) are implemented as a package (6).

6. Method according to any one of the preceding claims,
**characterised in that**
the at least one radar sensor (1) is operated with a frequency bandwidth greater than 1 GHz, in particular 4 GHz, and/or in a frequency range of 77 to 81 GHz.

7. Method according to any one of the preceding claims,
**characterised in that**
the carriageway distribution information is derived from digital map data of a navigation system (25) and/or an in particular country-specific traffic lane width (26) is taken into account as additional information.

8. Method according to any one of the preceding claims,
**characterised in that**
the carriageway distribution information includes a lane quantity.

9. Method according to Claim 8,
**characterised in that**
a carriageway width (28) is acquired from the lateral distances (24) and a width (27) of the motor vehicle (10) which is on file in the motor vehicle (10) and/or from the distance of the carriageway boundaries, wherein plausibility checks of the carriageway widths (28) determined from the radar data against one another is carried out and/or plausibility checks of the lane quantity and/or the traffic lane width (26) as plausibility values by acquiring comparison values from the carriageway width (28) if available from the partial information and the other plausibility value is carried out an/or intervals of the carriageway width (28) are at least partially assigned traffic lanes (17) based on the carriageway distribution information, wherein the lane assignment is carried out based on the position of the motor vehicle (10) along the carriageway width (28) known from the lateral distances (24).

10. Method according to any one of the preceding claims,
**characterised in that**
when acquiring the lane arrangement at least one transversely displaced motor vehicle detected in the radar data is taken into account.

11. Method according to any one of the preceding claims,
**characterised in that**
acquiring transverse position information is limited to at least one road type, in particular motorways.

12. Method according to any one of the preceding claims,
**characterised in that**
the transverse position information is used for the plausibility check of a lane arrangement based on camera data from a camera and/or as a backup in case of camera failure.

13. Motor vehicle (10) comprising at least one radar sensor (1) and a control device (14) configured to carry out a method according to any one of the preceding claims.

## Revendications

1. Procédé de détermination d'une donnée position transversale d'un véhicule à moteur (10) sur une chaussée (16),
**caractérisé en ce**
**que** des données radar décrivant au moins une partie de la chaussée (16) sont enregistrées avec au moins un capteur radar (1) du véhicule à moteur (10), des caractéristiques de l'environnement décrivant la position d'une délimitation de chaussée sont détectées et localisées dans les données radar par évaluation, à partir de celles-ci un tracé des délimitations de chaussée de la chaussée (16) et des distances latérales (24) du véhicule à moteur (10) par rapport aux délimitations de chaussée sont déterminés et la donnée position transversale est déterminée en tant que les ou en fonction des distances latérales (24) du véhicule à moteur (10) par rapport aux délimitations de chaussée, dans lequel un capteur radar haute précision (1) avec une puce semi-conductrice (4) réalisant l'émetteur-récepteur radar (7) est utilisé en tant que l'au moins un capteur radar (1) et un passage (18) du revêtement de chaussée à un autre sol est détecté et localisé en tant que caractéristiques de l'environnement, dans lequel une association de voie du véhicule à moteur (10) est définie en tant que donnée position transversale en tenant compte en plus d'au moins une donnée supplémentaire décrivant au moins le nombre de voies de circulation (17) de la chaussée (16), dans lequel une donnée de partage de chaussée déduite de données cartographiques numériques, qui comprend une donnée de part décrivant la présence et/ou la largeur et/ou la position d'une part de chaussée non utilisée en tant que voie de circulation (17), est prise en compte en tant que donnée supplémentaire.

2. Procédé selon la revendication 1,
**caractérisé en ce**
**qu'**en plus, des glissières de sécurité (20) et/ou des délinéateurs (21) et/ou une bordure (23) et/ou un objet d'aménagement latéral (19) et/ou des plantes (22) sont détectés et localisés en tant que caractéristiques de l'environnement.

3. Procédé selon la revendication 1 ou 2,
**caractérisé en ce**
**que** plusieurs capteurs radar (1), en particulier huit capteurs radar (1), détectant l'environnement du véhicule à moteur (10) dans une plage angulaire complète de 360° sont utilisés.

4. Procédé selon l'une quelconque des revendications précédentes,
**caractérisé en ce**
**qu'**une puce semi-conductrice (4) réalisée en tant que puce CMOS est utilisée.

5. Procédé selon l'une quelconque des revendications précédentes,
**caractérisé en ce**
**qu'**un composant de traitement de signal numérique (8) et/ou une unité de commande (9) du capteur radar (1) sont également réalisés par la puce semi-conductrice (4) et/ou la puce semi-conductrice (4) et un agencement d'antenne (5) du capteur radar (1) sont réalisés en tant que paquet (6).

6. Procédé selon l'une quelconque des revendications précédentes,
**caractérisé en ce**
**que** l'au moins un capteur radar (1) fonctionne avec une largeur de bande de fréquence supérieure à 1 GHz, en particulier 4 GHz, et/ou dans une plage de fréquence de 77 à 81 GHz.

7. Procédé selon l'une quelconque des revendications précédentes,
**caractérisé en ce**
**que** la donnée de partage de chaussée est déduite de données cartographiques numériques d'un système de navigation (25) et/ou une largeur de voie de circulation (26) en particulier spécifique au pays est prise en compte en tant que donnée supplémentaire.

8. Procédé selon l'une quelconque des revendications précédentes,
**caractérisé en ce**
**que** la donnée de partage de chaussée comprend un nombre de voies.

9. Procédé selon la revendication 8,
**caractérisé en ce**
**qu'**une largeur de chaussée (28) est déterminée à partir des distances latérales (24) et d'une largeur (27) du véhicule à moteur (10) déposée dans le véhicule à moteur (10) et/ou à partir de la distance des délimitations de chaussée, dans lequel une plausibilisation des largeurs de chaussée (28) définies à partir de données radar a lieu l'une par rapport à l'autre et/ou une plausibilisation du nombre de voies et/ou de la largeur de voie de circulation (26) a lieu en tant que valeurs de plausibilisation par détermination de valeurs de comparaison à partir de la largeur de chaussée (28), le cas échéant de la donnée de part et de la respectivement autre valeur de plausibilisation et/ou des voies de circulation (17) sont associées à des intervalles de la largeur de chaussée (28) au moins en partie sur la base de la donnée de partage de chaussée, dans lequel l'association de voie a lieu sur la base de la position du véhicule à moteur (10) connue par les distances latérales (24) le long de la largeur de chaussée (28).

10. Procédé selon l'une quelconque des revendications précédentes,
**caractérisé en ce**
**que**, lors de la détermination de l'association de voie, au moins un véhicule à moteur décalé transversalement, détecté dans les données radar, est pris en compte.

11. Procédé selon l'une quelconque des revendications précédentes,
**caractérisé en ce**
**que** la détermination de la donnée position transversale est limitée à au moins un type de route, en particulier des autoroutes.

12. Procédé selon l'une quelconque des revendications précédentes,
**caractérisé en ce**
**que** la donnée position transversale est utilisée pour la plausibilisation d'une association de voie sur la base de données de caméra d'une caméra et/ou en tant que plan de retour en cas de panne de la caméra.

13. Véhicule à moteur (10), présentant au moins un capteur radar (1) et un appareil de commande (14) réalisé pour la réalisation d'un procédé selon l'une quelconque des revendications précédentes.
